# FASCICULE DE BREVET EUROPEEN

(11) **EP 0 532 379 B1**
(45) Date de publication et mention de la délivrance du brevet: **07.01.1998**
(21) Numéro de dépôt: 92402325.2
(22) Date de dépôt: 21.08.1992
(51) Int. Cl.: G06K 9/74, G06E 3/00

(54) **Dispositif de reconnaissance automatique de panneaux de signalisation**
Vorrichtung zur automatischen Erkennung von Verkehrsschildern
Device for automatic recognition of traffic-signs

(30) Priorité: 13.09.1991 FR 9111338
(43) Date de publication de la demande: 17.03.1993
(73) Titulaire: AUTOMOBILES PEUGEOT, 75116 Paris (FR); AUTOMOBILES CITROEN, 92200 Neuilly-sur-Seine (FR)
(72) Inventeur: Attia, Mondher, F-92120 Montrouge (FR)
(74) Mandataire: Durand, Yves Armand Louis

(56) Documents cités:
- PATENT ABSTRACTS OF JAPAN vol. 7, no. 64 (P-183)(1209) 19 Juin 1981
- APPLIED OPTICS. vol. 30, no. 8, Mars 1991, NEW YORK US pages 915 - 916 F.T.S. YU ET AL. 'Optical disk based joint transform correlator'
- OPTICS COMMUNICATIONS. vol. 56, no. 6, 15 Janvier 1986, AMSTERDAM NL pages 384 - 389 F.T.S. YU ET AL. 'EXPERIMENTS ON REAL-TIME POLYCHROMATIC SIGNAL DETECTION BY MATCHED FILTERING'

## Description

La présente invention a essentiellement pour objet un dispositif de reconnaissance automatique de panneaux de signalisation routière.

On sait qu'actuellement des recherches sont activement menées en ce qui concerne la conduite automatique des véhicules, c'est-à-dire réduisant les interventions du conducteur et suppléant éventuellement aux défaillances de celui-ci en cas de danger par exemple.

Par ailleurs, on a déjà proposé des systèmes de reconnaissance automatique de formes d'objets, grâce auxquels on réalise une corrélation entre l'image de l'objet et une image de référence susceptible de correspondre à l'image de l'objet pour délivrer un signal lorsque les deux images sont sensiblement identiques.

On connaît aussi d'après le document JP-A-57210316 un dispositif de reconnaissance automatique qui correspond au préambule de la revendication 1.

La présente invention permet avantageusement une grande rapidité de traitement des informations, à tout le moins supérieure à celle obtenue avec des caméras vidéo habituelles, permet de réduire notablement la consommation de courant, et constitue une technologie peu encombrante et facile à installer sur un véhicule automobile par exemple.

A cet effet, l'invention a pour objet un dispositif de reconnaissance automatique de formes d'objets, comprenant:
une source laser émettant un faisceau unique,
un support d'images de référence traversé par le faisceau laser,
une optique de recombinaison et de transformation de deux faisceaux spatialement modulés,
un moyen constituant un modulateur de lumière spatial optiquement adressable (OASLM), de mémorisation d'une information spécifique résultant d'une correspondance entre les images transportées par lesdits faisceaux spatialement modulés précédemment recombinés et transformés, et une première camera transformant ladite information spécifique en un signal de commande;
caractérisé en ce qu'il comprend
un commutateur de polarisation du faisceau laser ;
un bloc optique réfléchissant ou transmettant le faisceau laser en fonction de la direction de polarisation ;
ledit bloc optique étant agencé en aval dudit commutateur de polarisation et en amont d'une part du moyen de mémorisation et d'autre part d'un moyen séparateur et polarisant du faisceau laser, de telle sorte que le parcours du faisceau peut être commuté entre le moyen de mémorisation et le moyen séparateur et polarisant,
ledit moyen séparateur et polarisant étant agencé de telle façon que le faisceau atteigne d'une part le support d'images de référence et d'autre part un modulateur de lumière spatial électriquement adressable (EASLM) auquel est associée une deuxième camera vidéo, de façon à obtenir lesdits faisceaux spatialement modulés.

Ce dispositif est encore caractérisé en ce que le support d'images de référence est une diapositive disposée parallèlement à un miroir.

Selon encore une autre caractéristique de l'invention, entre le moyen séparateur et le bloc optique précités est interposée une lame demi-onde, entre ledit moyen séparateur et l'optique précitée de recombinaison est interposée une lame demi-onde, et entre ledit moyen séparateur et la diapositive précitée est interposée une lame quart d'onde.

Selon une autre caractéristique de ce dispositif, la diapositive précitée comporte la représentation d'une pluralité de panneaux de signalisation routière susceptibles d'être reconnus par le dispositif.

Mais d'autres caractéristiques et avantages de l'invention apparaîtront mieux dans la description détaillée qui suit et se réfère aux dessins annexés donnés uniquement à titre d'exemple, et dans lesquels :

La figure 1 illustre le champ de vision d'une caméra vidéo embarquée sur un véhicule, et dans lequel champ est matérialisée une zone contenant un panneau à reconnaître.

La figure 2 est une vue schématique d'un dispositif selon l'invention dont le fonctionnement est illustré pour ce qui concerne la phase reconnaissance et mémorisation de la combinaison image-panneau et image-référence.

La figure 3 est une vue identique à la figure 2, mais illustrant le fonctionnement du dispositif dans sa phase ultérieure de lecture et de délivrance d'un signal de commande.

La figure 4 est une vue schématique et en plan d'une diapositive représentant un certain nombre de panneaux de signalisation routière.

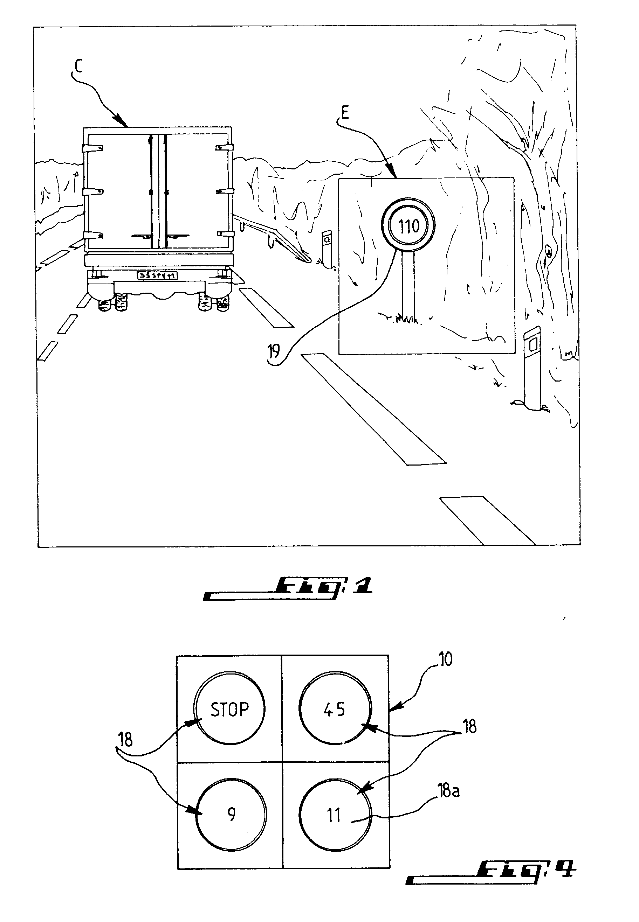

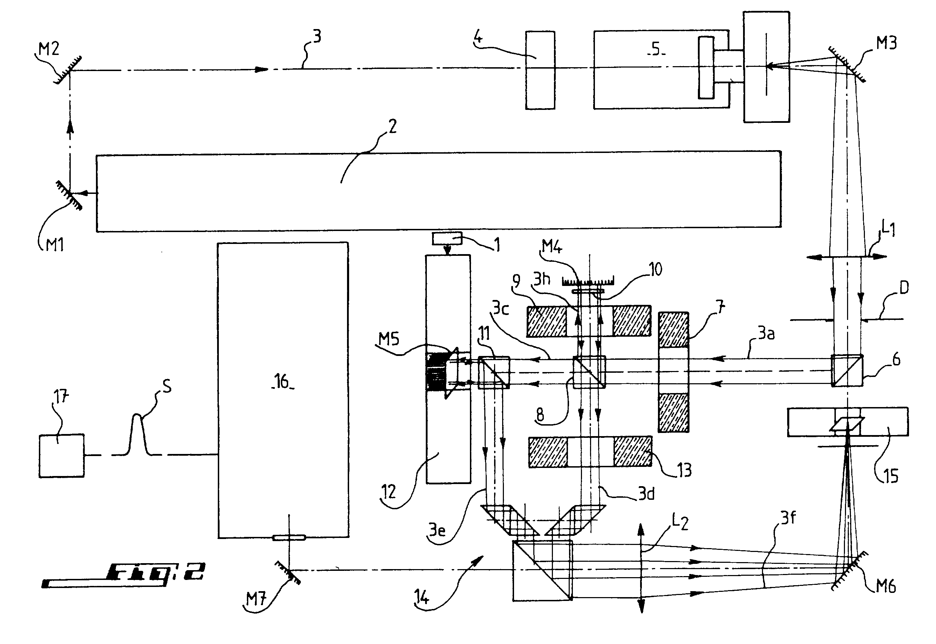

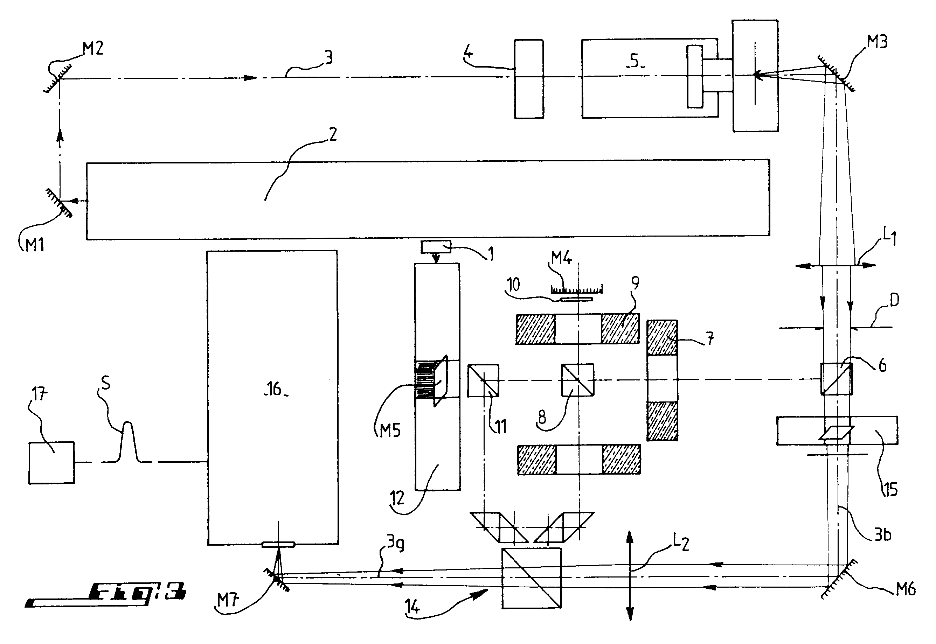

En se reportant notamment aux figures 2 et 3, on voit qu'un dispositif conforme aux principes de l'invention comprend tout d'abord une caméra vidéo 1 embarquée sur un véhicule (non représenté), de même qu'un laser 2 Hélium-Néon par exemple dont le faisceau émis a été matérialisé en 3.

Sur le trajet du faisceau 3 renvoyé par deux miroirs M₁, M₂ est placé un commutateur 4 de polarisation du faisceau laser 3.

A la suite de ce commutateur 4, est prévu un filtre spatial illustré schématiquement en 5 à la sortie duquel le faisceau laser 3 est renvoyé par un miroir M₃. Une lentille L₁ et un diaphragme D sont prévus en aval du miroir M₃.

On a montré en 6 un bloc optique susceptible de réféchir le faisceau laser en 3a (figure 2) ou de transmettre le faisceau laser en 3b (figure 3), et cela en fonction de la direction de polarisation imposée par le commutateur 4.

Sur le trajet du faisceau laser 3a est interposée une lame demi-onde 7 à laquelle fait ensuite un moyen optique 8 séparateur et polarisant du faisceau 3a.

Ainsi, le faisceau 3a est divisé en un faisceau 3h sur lequel est interposée une lame quart d'onde 9 et qui traverse un moyen supportant une ou plusieurs images de référence, tel que par exemple une diapositive 10 derrière laquelle est agencé un miroir M₄, et en un faisceau 3c passant au travers d'un bloc optique semi-réfléchissant 11 et aboutissant à un modulateur de lumière spatial électriquement adressable 12, appelé communément EASLM et en liaison fonctionnelle avec la caméra vidéo 1.

La partie 3h du faisceau laser réfléchie par le miroir M₄ repasse par le moyen séparateur 8 pour former une autre partie 3d du faisceau laser qui passe au travers d'une lame demi-onde 13.

La partie 3c du faisceau laser aboutit dans le modulateur 12 sur un miroir montré schématiquement en M₅ et réfléchissant ladite partie du faisceau laser 3c qui repasse par la lame semi-réfléchissante 11 pour former un autre faisceau montré en 3e.

Les deux faisceaux 3d et 3e sont réunis dans une optique appropriée 14 pour réaliser un faisceau unique 3f qui, passant par une lentille de Fourier L₂ et un miroir M₆, est focalisé dans un modulateur de lumière spatial optiquement adressable 15, appelé communément OASLM et susceptible de mémoriser une information spécifique résultant d'une correspondance entre les images transportées respectivement par les deux faisceaux recombinés 3d et 3e.

On a montré en 16 une caméra constituant un dispositif à transfert de charge (DTC) qui peut recevoir, comme on le voit mieux sur la figure 3, le faisceau laser 3g, renvoyé par un miroir M₇ vers ladite caméra. Ce faisceau 3g résulte d'un changement de direction de la polarisation du faisceau laser 3 par le commutateur 4, de sorte que ledit faisceau traversera le bloc optique 6 et le modulateur 15, pour aboutir à la caméra 16 via le système optique 14, comme matérialisé par des flèches sur la figure 3.

On a montré en S un signal délivré par la caméra 16 et susceptible de commander un moyen quelconque représenté très schématiquement en 17 et appartenant par exemple à un véhicule automobile.

En se reportant à la figure 4, on voit à plus grande échelle la diapositive 10 comportant un certain nombre d'images de panneaux de signalisation 18, soit, suivant l'exemple représenté, l'image d'un panneau stop et de trois panneaux de limitation de vitesse 9, 45 et 11, les nombres 9 et 11 signifiant en réalité 90 et 110 km/h, dans un but de simplification, le chiffre 0 n'étant pas significatif.

Si l'on se reporte maintenant à la figure 1, on voit que le champ capté par la caméra vidéo 1 est celui d'une route sur laquelle roule un camion C, et dans une zone duquel champ figure un encadré E matérialisant une zone sélectionnée par la caméra vidéo 1 et dans laquelle sera nécessairement localisé un panneau de signalisation routière 19, qui suivant l'exemple de réalisation représenté, est un panneau de limitation de vitesse à 110 km/h.

Mais pour une meilleure compréhension de l'invention, on expliquera maintenant brièvement le fonctionnement du dispositif qui vient d'être décrit et qui, d'une manière générale, permettra d'établir une corrélation entre l'image du panneau 19 et une image de référence 18 sur la diapositive 10, susceptible de correspondre à l'image du panneau 19, pour délivrer un signal tel que S lorsque les deux images sont identiques.

On précisera ici qu'on effectue une détection de contour dans la fenêtre ou encadré E, de sorte que seul le panneau dans cette fenêtre pourra être pris en compte par la caméra vidéo 1.

En agissant sur le commutateur de polarisation 4, on place tout d'abord le dispositif dans le mode de fonctionnement illustré sur la figure 2 dans lequel le faisceau laser 3 suit les trajets 3a, 3h, 3c, 3d, 3e, 3f, pour réaliser l'écriture et la mémorisation dans le modulateur 15 (OASLM) d'une information correspondant à la coïncidence de l'image du panneau 19 et d'une image de référence identique 18a.

Plus précisément suivant l'exemple présentement envisagé, l'image du panneau 19 et les images 18 de la diapositive 10 sont réunies par le système optique 14, puis, grâce à la lentille de Fourier L₂ réalisant une transformée de Fourier des images, celles-ci interfèrent pour donner un spectre mis en mémoire dans le modulateur 15 qui sera apte à fournir une information spécifique résultant de la correspondance entre l'image du panneau 19 et son image identique 18a sur la diapositive 10. On précisera ici que le modulateur 15, ainsi que le modulateur 12 sont des modulateurs à cristaux liquides ferroélectriques. Les deux modulateurs sont des valves optiques non linéaires d'un type connu en soi. On précisera encore que le commutateur de polarisation 4 est synchronisé avec la caméra vidéo 1 de façon à séquencer une phase d'écriture, comme on vient de le décrire précédemment, et une phase de lecture qui sera décrite ci-après.

La phase de lecture est clairement illustrée sur la figure 3 à laquelle on pourra se reporter. Ici, on a agi sur le commutateur de polarisation 4 de sorte que le faisceau laser 3 traversant le bloc optique 6, frappe la mémoire du modulateur 15 pour lire l'information précédemment mémorisée dans ledit modulateur et la transmettre optiquement à la caméra 16 via le système optique 14 et le miroir M₇.

La caméra ou dispositif à transfert de charge 16 comporte des zones (non représentées) correspondant aux zones contenant les images 18 des panneaux de signalisation figurant sur la diapositive 10. L'information spécifique (orientation particulière des cristaux liquides) contenue dans la mémoire de la valve optique non linéaire 15 et correspondant ici à la coïncidence de l'image du panneau 19 et de l'image de référence 18a sera transmise par le faisceau laser 3g à la caméra 16, plus précisément à la zone de cette caméra correspondant à la zone de l'image 18a sur la diapositive 10, ce qui permet d'identifier le panneau 19. L'intensité de l'information ainsi transmise à la caméra 16 sera supérieure à un certain seuil (se situant au dessus du bruit de fond), de sorte que finalement ladite caméra autorisera la délivrance du signal électrique S pouvant être fourni à un moyen 17, sur un véhicule par exemple, pour permettre l'actionnement de ce moyen.

On a donc réalisé suivant l'invention un procédé et un dispositif de reconnaissance automatique de panneaux de signalisation routière par exemple, qui présentent l'avantage de n'utiliser q'un seul appareil laser travaillant de préférence dans le rouge et possédant par exemple une puissance de l'odre de 5 milliwatts, de ne consommer par conséquent qu'une très faible puissance, ce qui est avantageux pour les véhicules automobiles, d'obtenir une détection et une commande d'un organe de véhicule qui sont très rapides en raison notamment du couplage du commutateur de polarisation 4 avec la caméra vidéo 1, et de constituer au total un ensemble de très faible encombrement aisé à monter et à embarquer sur un véhicule.

Bien entendu, l'invention n'est nullement limitée au mode de réalisation décrit et illustré qui n'a été donné qu'à titre d'exemple.

C'est ainsi que le sytème optique 14 de recombinaison des deux faisceaux 3d et 3e peut revêtir toute forme appropriée quelconque, et autre que celle représentée sur les figures 2 et 3. Dans cet ordre d'idées, l'invention peut s'appliquer à d'autres domaines que celui de la reconnaissance des panneaux de signalisation routière, tels que celui de la reconnaissance d'objets ou de pièces manipulées par des robots.

## Revendications

1. Dispositif de reconnaissance automatique de formes d'objets, comprenant :
une source laser (2) émettant un faisceau unique (3),
un support (10) d'images de référence traversé par le faisceau laser(3),
une optique (14,L2) de recombinaison et de transformation de deux faisceaux spatialement modulés (3d,3e),
un moyen (15) constituant un modulateur de lumière spatial optiquement adressable (OASLM), de mémorisation d'une information spécifique résultant d'une correspondance entre les images transportées par lesdits faisceaux (3d,3e) spatialement modulés précédemment recombinés et transformés et une première camera (16) transformant ladite information spécifique en un signal de commande (S);
caractérisé en ce qu'il comprend
un commutateur (4) de polarisation du faisceau laser (3);
un bloc optique (6) réfléchissant ou transmettant le faisceau laser (3) en fonction de la direction de polarisation ;
ledit bloc optique étant agencé en aval dudit commutateur de polarisation (4) et en amont d'une part du moyen (15) de mémorisation et d'autre part d'un moyen séparateur et polarisant (8) du faisceau laser(3), de telle sorte que le parcours du faisceau peut être commuté entre le moyen de mémorisation (15) et le moyen séparateur et polarisant (8),
ledit moyen séparateur et polarisant (8) étant agencé de telle façon que le faisceau (3) atteigne d'une part le support (10) d'images de référence et d'autre part un modulateur (12) de lumière spatial électriquement adressable (EASLM) auquel est associée une deuxième camera vidéo (1), de façon à obtenir lesdits faisceaux spatialement modulés (3d,3e).

2. Dispositif selon la revendication 1, caractérisé en ce que le support (10) d'images de référence est une diapositive disposée parallèlement à un miroir (M4)

3. Dispositif selon la revendication 2, caractérisé en ce qu'entre le moyen séparateur (8) et le bloc optique (6) précités est interposée une lame demi-onde (7), entre ledit moyen séparateur et l'optique précitée (14) de recombinaison est interposée une lame demi-onde (13) et entre ledit moyen séparateur et la diapositive précitée (10) est interposée une lame quart d'onde (9).

4. Dispositif selon la revendication 2 ou 3, caractérisé en ce que la diapositive précitée (10) comporte la représentation d'une pluralité de panneaux de signalisation routière (18, 18a).

## Patentansprüche

1. Vorrichtung zur automatischen Erkennung der Formen von Gegenständen, mit :
einer Laserquelle (2), die einen einzigen Strahl (3) aussendet ;
einem Träger (10) von Bezugsbildern, der von dem Laserstrahl (3) durchlaufen wird,
einer Optik (14, L2) zur Rekombination und zur Transformation von zwei räumlich modulierten Strahlen (3d, 3e),
ein Mittel (15), das einen optisch adressierbaren räumlichen Lichtmodulator (OASLM) darstellt, zur Speicherung einer spezifischen Information, die von einer Übereinstimmung zwischen den von den vorher rekombinierten und transformierten räumlich modulierten besagten Strahlen (3d, 3e) geförderten Bildern herrührt und eine erste Kamera (16), die die genannte spezifische Information in ein Steuersignal (S) umwandelt ;
dadurch gekennzeichnet, das sie besitzt :
einen Schalter (4) zur Polarisation des Laserstrahls (3) ;
einen optischen Block (6), der den Laserstrahl (3) reflektiert oder übermittelt, in Funktion von der Polarisationsrichtung ;
wobei der genannte optische Block abwärts von dem Polarisationsschalter (4) und aufwärts von einerseits dem Speichermittel (15) und andererseits einem Trenn- und Polarisiermittel (18) für den Laserstrahl (3) angeordnet ist, so daß der Weg des Strahls zwischen dem Speichermittel (15) und dem Trenn- und Polarisationsmittel (8) umgeschaltet werden kann,
wobei das genannte Trenn- und Polarisationsmittel (8) so angeordnet ist, daß der Strahl (3) einerseits den Bezugsbildträger (10) und andererseits einen elektrisch adressierbaren räumlichen Lichtmodulator (EASLM) (12), dem eine zweite Videokamera (1) zugeordnet ist, erreicht, so daß die genannten räumlich modulierten Strahlen (3d, 3e) erhältlich sind.

2. Vorrichtung nach Anspruch 1, dadurch gekennzeichnet, daß der Bezugsbildträger (10) ein Diapositiv ist, das parallel zu einem Spiegel (M4) angeordnet ist.

3. Vorrichtung nach Anspruch 2, dadurch gekennzeichnet, daß zwischen dem genannten Trennmittel (8) und dem genannten optischen Block (6) ein Lambda-halbe Blättchen (7) zwischen dem genannten Trennmittel und der genannten Optik (14) zur Rekombination ein Lambda-halbe Blättchen (13) und zwischen dem genannten Trennmittel und dem genannten Diapositiv 10 ein Lambda-viertel Blättchen (9) angeordnet ist

4. Vorrichtung nach Anspruch 2 oder 3, dadurch gekennzeichnet, daß das genannte Diapositiv 10 die Abbildung einer Vielzahl von Verkehrssignalisationsschildern (18, 18a) besitzt.

## Claims

1. Device for automatic recognition of the shapes of objects, comprising :
a laser source (2) emitting a single beam (3),
a reference image support (10) traversed by the laser beam (3),
optical means (14, L2) for the recombination and the transformation of two beams spatially modulated (3d, 3e),
a means (15) forming an optically addressable spatial light modulator (OASLM) for storing a specific information resulting from a correspondence between the images transported by said beams (3d, 3e) spatially modulated, preceedingly recombined and transformed and a first camera (16) transforming said specific information into a control signal (S) ;
characterized in that it comprises :
a switch (4) for polarising the laser beam (3) ;
an optical bloc (6) reflecting or transmitting the laser beam (3) in function of the polarisation direction ;
said optical bloc being arranged downstream from said polarisation switch (4) and upstream from, on the one hand a storing means (15) and, on the other hand a means for separating and polarising (8) said laser beam (3) in such a manner that the path of the beam can be switched between the storing means (15) and the separator and polarising means (8),
said separator and polarising means (8) being arranged in a way that the beam (3) reaches on the one hand the reference image support (10) and, on the other hand an electrically addressable spatial light modulator (EASLM) (12) to which is associated a second video camera (1) in view to obtain said spatially modulated beams (3d, 3e).

2. Device according to claim 1, characterized in that the reference image support (10) is a slide arranged in a parallel relationship to a mirror (M4).

3. Device according to claim 2, characterized in that between the said separator means (8) and said optical bloc (6) is inserted a half-wave plate (7), between said separator means and said recombination optical means (14) is inerted a half-wave plate or blade (13) and between said separator means and said slide (10) is inserted a quarter-wave plate (9).

4. Device according to claim 2 or 3, characterized in that said slide includes the representation of a plurality of road signalling panels (18, 18a).
